# EUROPEAN PATENT APPLICATION

(11) **EP 4 628 985 A1**
(43) Date of publication of application: **08.10.2025**
(21) Application number: 23897570.0
(22) Date of filing: 20.11.2023
(51) Int. Cl.: G03B 11/00, G03B 5/00, G03B 7/091, G03B 17/14, G03B 17/18, H04N 23/55, H04N 23/66, H04N 23/67, H04N 23/68

(54) **OPTICAL DEVICE**

(30) Priority: 01.12.2022 JP 2022192589; 24.10.2023 JP 2023182807
(71) Applicant: CANON KABUSHIKI KAISHA, Tokyo 146-8501 (JP)
(72) Inventor: IKEGAYA, Yuki, Tokyo 146-8501 (JP)
(74) Representative: TBK
(86) International application number: PCT/JP2023/041562
(87) International publication number: WO 2024/116922

(57) **Abstract**

[PROBLEMS] To suppress deterioration of optical performance according to insertion/removal and type of wavelength filter.

[SOLUTION MEANS] An optical apparatus 200 includes a processing means 203, 208 configured to perform processing regarding imaging in a case where a wavelength filter 201 configured to control a wavelength of imaging light incident on an image sensor 202 configured to capture an object image formed by an optical system 101 can be inserted or removed, and an acquiring means 208 configured to acquire optical information on the optical system that is used for the processing, the optical information corresponding to the wavelength of the imaging light according to at least one of insertion/removal and a type of the wavelength filter.

## Description

### FIELD OF ART

The present invention relates to an optical apparatus, such as a lens apparatus and an image pickup apparatus.

### BACKGROUND ART

In an optical apparatus in which a wavelength filter configured to control the wavelength of imaging light can be inserted and removed, narrowband light such as infrared light can be imaged by inserting the wavelength filter, or broadband light including visible light and infrared light can be imaged by removing the wavelength filter.

Patent Document 1 discloses an optical apparatus in which an infrared cut filter and clear glass can be selectively inserted and removed, and a flange back adjusting lens is displaced using correction data for correcting a difference between an optical path length when the infrared cut filter is inserted and an optical path length when the clear glass is inserted.

### PRIOR ART DOCUMENT

### PATENT DOCUMENT

Patent Document 1: Japanese Patent Laid-Open No. 2006-162757

### SUMMARY OF THE INVENTION

### PROBLEMS TO BE SOLVED BY THE INVENTION

However, in a case where optical information optimized for imaging narrowband light (such as sensitivity information for a focus lens or image stabilizing lens) is used in imaging broadband light, optical performance may deteriorate and a high-quality captured image may not be obtained.

The present invention provides an optical apparatus that can suppress deterioration in optical performance caused by the insertion/removal and type of wavelength filter.

### MEANS TO SOLVE THE PROBLEM

An optical apparatus according to one aspect of the present invention includes a processing means configured to perform processing regarding imaging in a case where a wavelength filter configured to control a wavelength of imaging light incident on an image sensor configured to capture an object image formed by an optical system can be inserted or removed, and an acquiring means configured to acquire optical information on the optical system that is used for the processing, the optical information corresponding to the wavelength of the imaging light according to at least one of insertion/removal and a type of the wavelength filter.

A control method of an optical apparatus according to another aspect of the present invention includes the steps of perform processing regarding imaging in a case where a wavelength filter configured to control a wavelength of imaging light incident on an image sensor configured to capture an object image formed by an optical system can be inserted or removed, and acquire optical information on the optical system that is used for the processing, the optical information corresponding to the wavelength of the imaging light according to at least one of insertion/removal and a type of the wavelength filter. A program that causes a computer to execute processing according to the above control method also constitutes another aspect of the present invention.

### EFFECT OF THE INVENTION

The present invention can provide an optical apparatus that can suppress deterioration in optical performance caused by the insertion/removal and type of wavelength filter.

### BRIEF DESCRIPTION OF THE DRAWINGS

FIG. 1 is a diagram illustrating the configuration of a lens interchangeable type camera system according to one embodiment of the present invention.
FIG. 2 is a diagram illustrating spectral sensitivity characteristics according to this embodiment.
FIG. 3 is a flowchart illustrating optical information acquisition processing according to Example 1.
FIG. 4 is a flowchart illustrating optical information acquisition processing according to Example 2.
FIG. 5 is a flowchart illustrating optical information acquisition processing according to Example 3.

### EMBODIMENTS FOR PRACTICING THE INVENTION

Hereinafter, an embodiment of the present invention will be described with reference to the drawings.

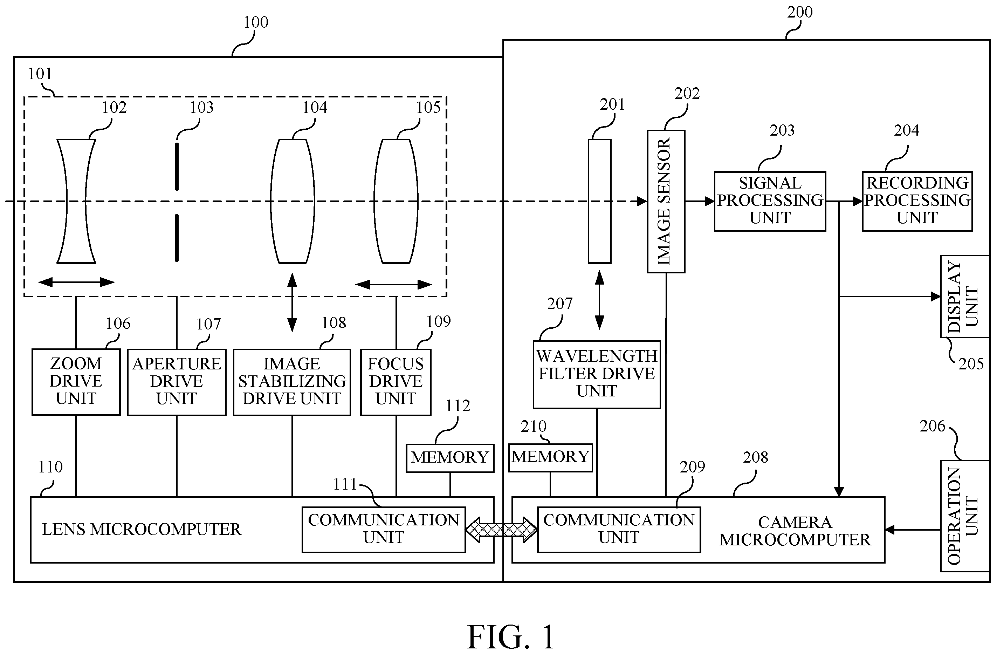

FIG. 1 illustrates the configuration of a lens interchangeable type camera system according to one embodiment of the present invention. The lens interchangeable type camera system includes a camera body 200 as an image pickup apparatus (optical apparatus) and an interchangeable lens 100 as a lens apparatus that is detachably and communicably connected to the camera body 200. The interchangeable lens 100 and the camera body 200 communicate with each other via communication units 111 and 209 provided to them, respectively.

The interchangeable lens 100 includes an imaging optical system 101. The imaging optical system 101 includes a zoom lens 102, an aperture stop 103, an image stabilizing lens (image stabilizing means) 104, and a focus lens (focusing means) 105. The interchangeable lens 100 further includes a zoom drive unit 106, an aperture drive unit 107, an image stabilizing drive unit 108, a focus drive unit 109, a lens microcomputer (referred to as a lens microcomputer hereinafter) 110, and a memory 112.

The zoom lens 102 changes a focal length of the imaging optical system 101, i.e., varies the magnification, by moving in an optical axis direction of the imaging optical system 101 (an arrow direction in the figure). The zoom drive unit 106 moves the zoom lens 102 according to an instruction from the lens microcomputer 110 that acquires the position of the zoom lens 102 detected using a position sensor such as a potentiometer (not illustrated).

The aperture stop 103 includes aperture blades that change an aperture diameter to adjust a light amount passing through the imaging optical system 101. The aperture drive unit 107 drives an actuator such as a stepping motor to change the aperture diameter of the aperture stop 103 according to an instruction from the lens microcomputer 110 that acquires the aperture diameter detected by a sensor such as a photo-interrupter (not illustrated).

The image stabilizing lens 104 corrects image blur caused by movement applied to the camera system (camera shake) by moving in a direction orthogonal to the optical axis of the imaging optical system 101 (arrow direction in the figure). The image stabilizing drive unit 108 drives an actuator such as a voice coil motor to move the image stabilizing lens 104 according to an instruction from a lens microcomputer 110 that acquires camera shake detected by a gyro sensor or acceleration sensor (not illustrated).

The focus lens 105 adjusts an imaging position of the imaging optical system 101 by moving in the optical axis direction of the imaging optical system 101. The focus drive unit 109 drives an actuator such as a stepping motor to move the focus lens 105 according to an instruction from the lens microcomputer 110 that acquires the position of the focus lens 105 detected by a position sensor such as an encoder (not illustrated).

The memory 112 includes a Read Only Memory (ROM), a Random Access Memory (RAM), etc., and stores optical information required to control the driving of the zoom lens 102, the aperture stop 103, the image stabilizing lens 104, and the focus lens 105. Specific examples of optical information will be described later.

The camera body 200 includes a wavelength filter 201, an image sensor 202, a signal processing unit 203, a recording processing unit 204, a wavelength filter drive unit 207, a display unit 205, an operation unit 206, a camera microcomputer (referred to as camera MCU hereinafter) 208, and a memory 210.

The image sensor 202 is a photoelectric conversion element including a CMOS sensor, a CCD sensor, or the like, and photoelectrically converts (captures) an object image formed by the imaging optical system 101.

The wavelength filter 201 can be inserted into and removed from a filter insertion position between the imaging optical system 101 and the image sensor 202, and when inserted into the filter insertion position, it controls (limits) the wavelength of the imaging light that passes through the wavelength filter 201 and enters the image sensor 202. The wavelength filter 201 is a filter such as an infrared cut filter or a bandpass filter, whose transmittance of light in a specific wavelength range is lower than that of light in other wavelength ranges. In this embodiment, the wavelength filter 201 moves inside the camera body 200 to be inserted or removed from the filter insertion position, but it may be removable to a position outside the camera body 200. In this embodiment, the filter insertion position is located between the imaging optical system 101 and the image sensor 202, but the filter insertion position may be provided inside the imaging optical system.

The wavelength filter drive unit 207 inserts or removes the wavelength filter 201 into or from the filter insertion position by driving an actuator according to a manual operation by a user or an instruction from a camera microcomputer 208. The camera microcomputer 208 can determine whether the wavelength filter 201 has been inserted or removed from the filter insertion position, and obtain information on the type of the inserted wavelength filter 201. More specifically, the insertion or removal of the wavelength filter 201 is determined and the type information is obtained by communication with the operation history of the wavelength filter drive unit 207 and a Radio Frequency Identification (RFID) tag provided on the wavelength filter 201. Furthermore, the insertion/removal of the wavelength filter 201 may be determined and information on the type may be obtained using a signal from a sensor that detects the insertion of the wavelength filter 201, such as a photo-interrupter provided in the wavelength filter drive unit 207. Moreover, information on the type of the wavelength filter 201 may be obtained based on the shape of the inserted wavelength filter 201.

In this embodiment, the wavelength filter 201 and the wavelength filter drive unit 207 are provided in the camera body 200, but they may be provided in the interchangeable lens 100. In this case, the wavelength filter drive unit inserts and removes the wavelength filter 201 according to a manual operation by the user or an instruction from the lens microcomputer 110.

An analog image signal output from the image sensor 202 that has captured an object image is input into the signal processing unit 203 and converted into a digital image signal. The signal processing unit 203 performs various signal processing such as noise removal and color correction for the digital image signal to generate a video signal, a focus signal, a luminance signal, a color difference signal, and the like. The video signal output from the signal processing unit 203 is sent to the recording processing unit 204. The signal processing unit 203 generates still image data and moving image data from the video signal and records the data on an unillustrated recording medium.

A focus signal output from the signal processing unit 203 is input into the camera microcomputer 208. The focus signal indicates, for example, a defocus amount in focus detection using a phase-difference detecting method. The camera microcomputer 208 converts the defocus amount into a drive amount for the focus lens 105 and transmits a focus command including the drive amount to the lens microcomputer 110. The lens microcomputer 110 issues an instruction to the focus drive unit 109 based on the received focus command to drive the focus lens 105. Thereby, autofocus (AF) is performed.

The luminance signal output from the signal processing unit 203 is input into the camera microcomputer 208. The camera microcomputer 208 calculates the aperture value (F-number), shutter speed, and sensitivity of the image sensor 202 so that a brightness evaluation value obtained from the luminance signal is proper. The camera microcomputer 208 transmits an aperture command including the calculated aperture value to the lens microcomputer 110. The lens microcomputer 110 issues an instruction to the aperture drive unit 107 based on the received aperture command to drive the aperture stop 103. The camera microcomputer 208 sets the calculated shutter speed and the sensitivity of the image sensor 202. Thereby, auto-exposure (AE) is performed.

The operation unit 206 has an imaging instruction switch (not illustrated) and a switch for setting an imaging condition, etc. The camera microcomputer 208 performs various controls according to input from the operation unit 206.

The camera microcomputer 208 performs, as an acquiring means, optical information acquisition processing to acquire optical information from the interchangeable lens 100 corresponding to a wavelength (specific wavelength: referred to as optical information acquisition wavelength hereinafter) selected by the user or automatically selected by the camera microcomputer 208. The optical information acquisition processing will be described in detail later. The camera microcomputer 208 also performs processing regarding imaging, including control of the imaging optical system 101 using the acquired optical information and image processing to a video signal generated by the signal processing unit 203 based on the output from the image sensor 202 using the optical information. The camera microcomputer 208 and the signal processing unit 203 constitute a processing means.

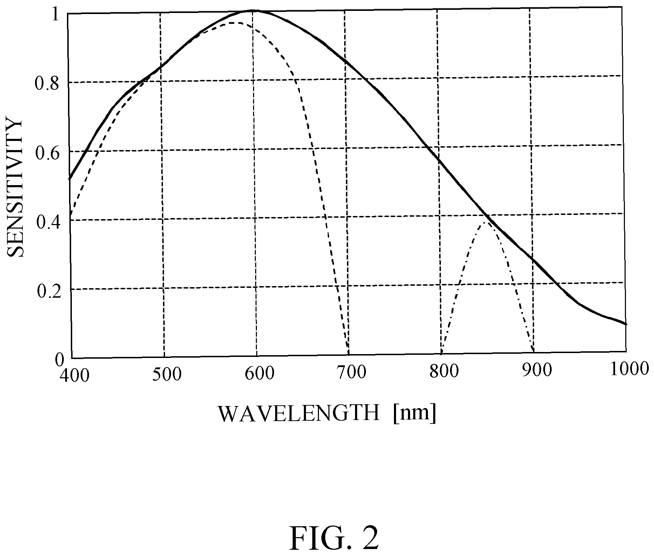

FIG. 2 illustrates spectral sensitivity characteristics of light received by the image sensor 202 when no wavelength filter is inserted (solid line), when an infrared cut filter is inserted (broken line), and when a bandpass filter that transmits light with a wavelength of around 850 nm is inserted (alternate long and short dash line), into the filter insertion position.

The spectral sensitivity characteristic when the wavelength filter is removed matches the spectral sensitivity characteristic of the image sensor 202. The spectral sensitivity characteristic when the infrared cut filter is inserted is expressed as the product of the spectral sensitivity characteristic of the infrared cut filter and the spectral sensitivity characteristic of the image sensor 202. The spectral sensitivity characteristic when the bandpass filter that transmits light with a wavelength of around 850 nm is inserted is expressed as the product of the spectral sensitivity characteristic of the bandpass filter and the spectral sensitivity characteristic of the image sensor 202.

In this embodiment, within the wavelength range having these spectral sensitivity characteristics, the optical information acquisition wavelength for acquiring optical information is selected by the user or automatically selected by the camera microcomputer 208.

### EXAMPLE 1

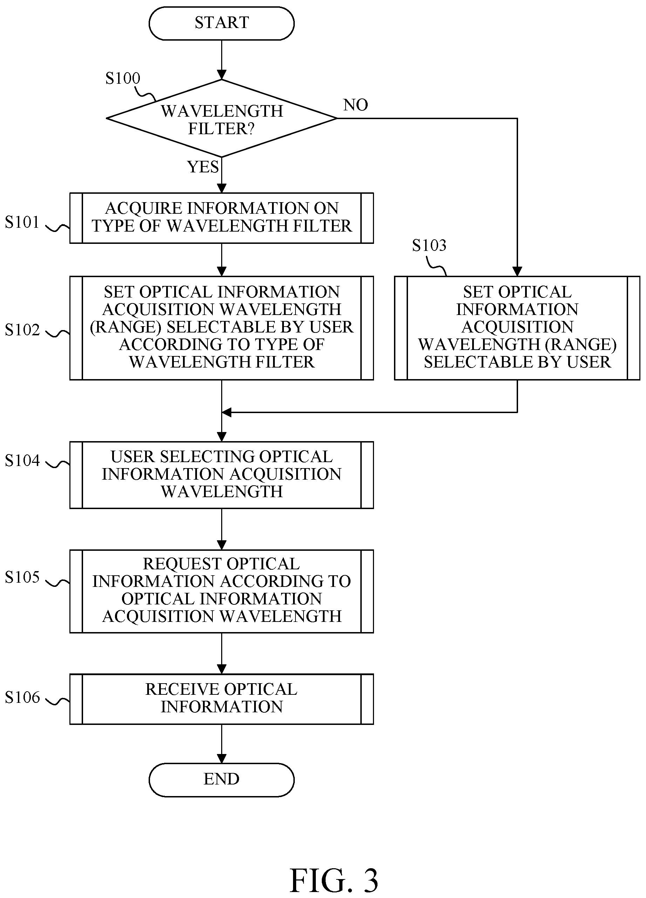

A flowchart in FIG. 3 illustrates the optical information acquisition processing that the camera microcomputer 208 executes according to a program in a case where the user selects an optical information acquisition wavelength.

In step S100, the camera microcomputer 208 determines whether or not the wavelength filter 201 is inserted into the filter insertion position. In a case where the wavelength filter 201 is inserted, the camera microcomputer 208 proceeds to step S101, and in a case where the wavelength filter 201 is not inserted, the camera microcomputer 208 proceeds to step S103.

In step S101, the camera microcomputer 208 acquires information on the type of wavelength filter 201 inserted into the filter insertion position.

Next, in step S102, the camera microcomputer 208 sets an optical information acquisition wavelength that can be selected by the user based on the information on the type of wavelength filter 201 acquired in step S101. Table 1 illustrates an optical information acquisition wavelength for each type of wavelength filter. Types of wavelength filters include an infrared cut filter, an 850 nm bandpass filter, and a 940 nm bandpass filter. In a case where the type of wavelength filter 201 is an infrared cut filter, the selectable optical information acquisition wavelength is set to a wavelength in a range of 400 to 700 nm, and in a case where the type is an 850 nm or 940 nm bandpass filter, the optical information acquisition wavelength is set to 850 nm and 940 nm, respectively. Then, the flow proceeds to step S104.

In a case where the type of wavelength filter 201 is fixed to only an infrared cut filter, step S101 may be omitted, and the optical information acquisition wavelength of 400 to 700 nm corresponding to the infrared cut filter may be set in step S102.

On the other hand, in step S103, the camera microcomputer 208 sets an optical information acquisition wavelength selectable by the user when the wavelength filter 201 is not inserted. For example, as illustrated in Table 1, the selectable optical information acquisition wavelength is set to a wavelength in the range of 400 to 1000 nm. Then, the flow proceeds to step S104.

In step S104, the camera microcomputer 208 displays on the display unit 205 the (range of) optical information acquisition wavelength selectable by the user that has been set in step S102 or step S103.

When the user viewing the display on the display unit 205 selects an optical information acquisition wavelength via the operation unit 206, the camera microcomputer 208 in step S105 sends an optical information transmission request including the selected optical information acquisition wavelength to the lens microcomputer 100. The lens microcomputer 110 that has received the optical information transmission request reads out the optical information corresponding to the optical information acquisition wavelength from the memory 112 and sends it to the camera microcomputer 208.

Tables 3 to 11 illustrate examples of optical information stored in the memory 112 corresponding to a first wavelength (400 nm) and a second wavelength (850 nm) as the optical information acquisition wavelengths. In a case where the selected optical information acquisition wavelength is 400 nm, the lens microcomputer 110 transmits optical information corresponding to 400 nm to the camera microcomputer 208, and in a case where the selected optical information acquisition wavelength is 850 nm, the lens microcomputer 110 transmits optical information corresponding to 850 nm to the camera microcomputer 208.

Table 3 illustrates an actual focal length for each position (zoom position) of the zoom lens 102 and each object distance, Table 4 illustrates an effective F-number for each zoom position and object distance, and Table 5 illustrates an imaging magnification for each zoom position and object distance. Table 6 illustrates a position of the focus lens 105 at which an in-focus state is obtained for each zoom position and object distance.

Table 7 illustrates a focus sensitivity for each zoom position and object distance. The focus sensitivity is a ratio between the unit moving amount of the focus lens 105 and a change amount in the imaging position (i.e., the back focus).

Table 8 illustrates a position of a floating lens for each zoom position and object distance. Although not illustrated in FIG. 1, the floating lens is a lens that moves to reduce the change in the angle of view (breathing) and the aberration fluctuation along with the movement of the focus lens 105.

Table 9 illustrates an image stabilizing sensitivity for each zoom position and object distance. The image stabilizing sensitivity is a ratio between the unit moving amount of the image stabilizing lens 104 and an image displacement amount on the image sensor 202 (in other words, the image stabilizing angle around the center, such as the front principal-point position).

Table 10 illustrates a front principal-point position of the imaging optical system 101 for each zoom position and object distance, and Table 11 illustrates a peripheral illumination ratio at an image height of 15 mm for each zoom position and object distance. The peripheral illumination ratio is a ratio of a light amount entering that image height to a position at an image height of 0.

**TABLE 1**

| Type of Wavelength Filter | Wavelength Range |
|---|---|
| Infrared cut filter | 400-700 [nm] |
| 850 nm bandpass filter | 850 [nm] |
| 940 nm bandpass filter | 940 [nm] |
| ... | ... |
| No wavelength filter | 400-1000 [nm] |

**TABLE 2**

| Type of Wavelength Filter | Wavelength |
|---|---|
| Infrared cut filter | 600 [nm] |
| 850 nm bandpass filter | 850 [nm] |
| 940 nm bandpass filter | 940 [nm] |
| ... | ... |
| No wavelength filter | 700 [nm] |

**TABLE 3**

| Actual Focal Length [mm] (Wavelength 400 nm) | | | | |
|---|---|---|---|---|
| | | Object Distance | | |
| | | Infinity | ... | 0.3 m |
| Zoom Position | Wide | 24.5 | ... | 24.2 |
| | ... | ... | ... | ... |
| | Tele | 70.5 | | 70 |

| Actual Focal Length [mm] (Wavelength 850 nm) | | | | |
|---|---|---|---|---|
| | | Object Distance | | |
| | | Infinity | ... | 0.3 m |
| Zoom Position | Wide | 24.6 | ... | 24.3 |
| | ... | ... | ... | ... |
| | Tele | 70.8 | | 70.3 |

**TABLE 4**

| Effective Fno (Wavelength 400 nm) | | | | |
|---|---|---|---|---|
| | | Object Distance | | |
| | | Infinity | ... | 0.3 m |
| Zoom Position | Wide | 4.02 | ... | 4.04 |
| | | ... | ... | |
| | Tele | 4.08 | | 4.15 |

| Effective Fno (Wavelength 850 nm) | | | | |
|---|---|---|---|---|
| | | Object Distance | | |
| | | Infinity | ... | 0.3 m |
| Zoom Position | Wide | 4.03 | ... | 4.05 |
| | | ... | ... | |
| | Tele | 4.1 | | 4.17 |

**TABLE 5**

| Imaging Magnification (Wavelength 400 nm) | | | | |
|---|---|---|---|---|
| | | Object Distance | | |
| | | Infinity | ... | 0.3 m |
| Zoom Position | Wide | 0 | ... | -0.6 |
| | ... | ... | ... | ... |
| | Tele | 0 | | -0.3 |

| Imaging Magnification (Wavelength 850 nm) | | | | |
|---|---|---|---|---|
| | | Object Distance | | |
| | | Infinity | ... | 0.3 m |
| Zoom Position | Wide | 0 | ... | -0.7 |
| | ... | ... | ... | ... |
| | Tele | 0 | | -0.2 |

**TABLE 6**

| Focus Lens Position [mm] (Wavelength 400 nm) | | | | |
|---|---|---|---|---|
| | | Object Distance | | |
| | | Infinity | ... | 0.3 m |
| Zoom Position | Wide | 1.6 | ... | -3.1 |
| | ... | ... | ... | ... |
| | Tele | 0 | | -5.7 |

| Focus Lens Position [mm] (Wavelength 850 nm) | | | | |
|---|---|---|---|---|
| | | Object Distance | | |
| | | Infinity | ... | 0.5 m |
| Zoom Position | Wide | 1.7 | ... | -3.0 |
| | ... | ... | ... | ... |
| | Tele | 0.3 | | -5.4 |

**TABLE 7**

| Focus Sensitivity [mm/mm] (Wavelength 400 nm) | | | | |
|---|---|---|---|---|
| | | Object Distance | | |
| | | Infinity | ... | 0.3 m |
| Zoom Position | Wide | -0.4 | ... | -0.5 |
| | ... | ... | ... | ... |

| | | | | |
|---|---|---|---|---|
| | Tele | -2.1 | | -2.2 |

| Focus Sensitivity [mm/mm] (Wavelength 850 nm) | | | | |
|---|---|---|---|---|
| | | Object Distance | | |
| | | Infinity | ... | 0.3 m |
| Zoom Position | Wide | -0.5 | ... | -0.6 |
| | ... | ... | ... | ... |
| | Tele | -2.0 | | -2.1 |

**TABLE 8**

| Floating Lens Position [mm] (Wavelength 400 nm) | | | | |
|---|---|---|---|---|
| | | Object Distance | | |
| | | Infinity | ... | 0.3 m |
| Zoom Position | Wide | -0.8 | ... | 1.6 |
| | ... | ... | ... | ... |
| | Tele | 0 | | 2.7 |

| Floating Lens Position [mm] (Wavelength 850 nm) | | | | |
|---|---|---|---|---|
| | | Object Distance | | |
| | | Infinity | ... | 0.5 m |
| Zoom Position | Wide | -0.9 | ... | 1.5 |
| | ... | ... | ... | ... |
| | Tele | -0.1 | | 2.5 |

**TABLE 9**

| Image Stabilizing Sensitivity [mm/mm] (Wavelength 400 nm) | | | | |
|---|---|---|---|---|
| | | Object Distance | | |
| | | Infinity | ... | 0.3 m |
| Zoom Position | Wide | 1.7 | ... | 1.4 |
| | ... | ... | ... | ... |
| | Tele | 1.3 | | 1.2 |

| Image Stabilizing Sensitivity [mm/mm] (Wavelength 850 nm) | | | | |
|---|---|---|---|---|
| | | Object Distance | | |
| | | Infinity | ... | 0.3 m |
| Zoom Position | Wide | 1.6 | ... | 1.3 |
| | ... | ... | ... | ... |
| | Tele | 1.2 | | 1.1 |

**TABLE 10**

| Front Principal-Point Position [mm] (Wavelength 400 nm) | | | | |
|---|---|---|---|---|
| | | Object Distance | | |
| | | Infinity | ... | 0.3 m |
| Zoom Position | Wide | 70 | ... | 80 |
| | ... | ... | ... | ... |
| | Tele | 86 | | 89 |

| Front Principal-Point Position [mm] (Wavelength 850 nm) | | | | |
|---|---|---|---|---|
| | | Object Distance | | |
| | | Infinity | ... | 0.3 m |
| Zoom Position | Wide | 71 | ... | 81 |
| | ... | ... | ... | ... |
| | Tele | 87 | | 91 |

**TABLE 11**

| Peripheral Illumination Ratio at Image Height of 15 mm [%] (Wavelength 400 nm) | | | | |
|---|---|---|---|---|
| | | Object Distance | | |
| | | Infinity | ... | 0.3 m |
| Zoom Position | Wide | 61 | ... | 68 |
| | ... | ... | ... | ... |
| | Tele | 41 | | 44 |

| Peripheral Illumination Ratio at Image Height of 15 mm [%] (Wavelength 850 nm) | | | | |
|---|---|---|---|---|
| | | Object Distance | | |
| | | Infinity | ... | 0.3 m |
| Zoom Position | Wide | 60 | ... | 67 |
| | ... | ... | ... | ... |
| | Tele | 39 | | 42 |

The optical information may be information indicating the above-mentioned actual focal length, effective F-number, imaging magnification, focus lens position, focus sensitivity, floating lens position, image stabilizing sensitivity, and front principal-point position, or may be information that can be converted into each of them. In other words, the optical information may be information regarding the focal length, F-number, imaging magnification, focus lens position, focus sensitivity, floating lens position, image stabilizing sensitivity, and front principal-point position.

Next, in step S106, the camera microcomputer 208 receives the optical information transmitted from the lens microcomputer 110 and stores it in the memory 210.

Thereafter, the camera microcomputer 208 performs the above-mentioned processing to imaging using the optical information stored in the memory 210.

This embodiment performs various controls to drive the focus lens, image stabilizing lens, and aperture stop using optical information corresponding to the optical information acquisition wavelength selected by the user according to the insertion/removal or type of wavelength filter. Therefore, good optical performance can be obtained regardless of whether a wavelength filter is inserted or removed or regardless of the type of filter, and as a result, a high-quality captured image can be obtained.

This embodiment has discussed a case where the camera body 200 performs processing regarding imaging using optical information acquired from the interchangeable lens 100, but the interchangeable lens (optical apparatus) itself may perform processing regarding imaging using optical information. For example, in driving a focus lens or an image stabilizing lens based on a command from the camera body, a drive amount may be corrected based on optical information (i.e., the imaging optical system may be controlled). The processing regarding imaging also includes processing of reading optical information from the memory 112 and transmitting it to the camera body 100 configured to perform imaging. This is similarly applicable to the other embodiments described below. Also, the camera body 200 may obtain optical information via communication from a server on the cloud, rather than from the interchangeable lens 100.

### EXAMPLE 2

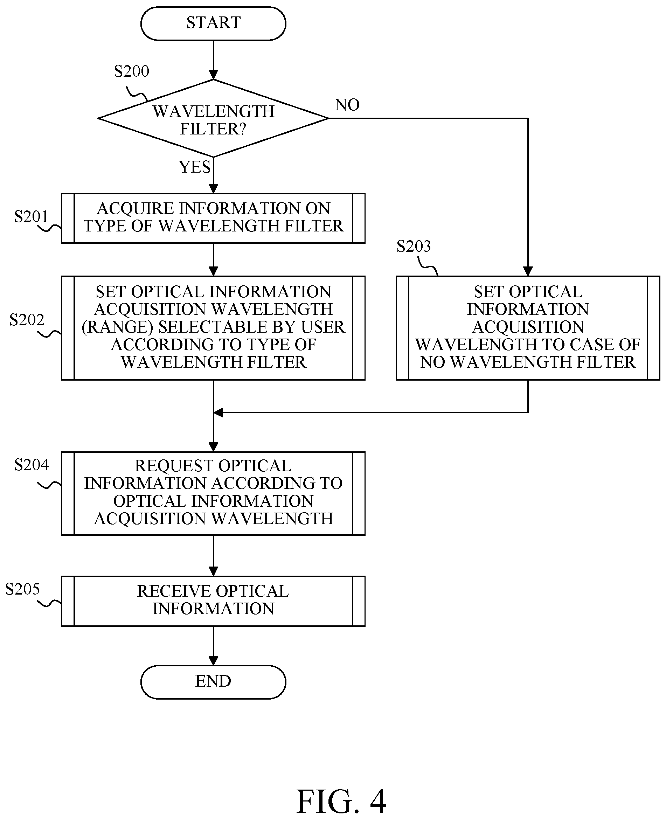

A flowchart in FIG. 4 illustrates the optical information acquisition processing executed by the camera microcomputer 208, which automatically sets the optical information acquisition wavelength, according to a program.

In step S200, the camera microcomputer 208 determines whether or not the wavelength filter 201 is inserted into the filter insertion position. In a case where the wavelength filter 201 is inserted, the camera microcomputer 208 proceeds to step S201, and in a case where the wavelength filter 201 is not inserted, the camera microcomputer 208 proceeds to step S203.

In step S201, the camera microcomputer 208 acquires information on the type of wavelength filter 201 inserted into the filter insertion position.

Next, in step S202, the camera microcomputer 208 sets the optical information acquisition wavelength associated with the type of wavelength filter 201 based on the information on the type of wavelength filter 201 acquired in step S201. Table 2 illustrates the optical information acquisition wavelengths associated with the types of the wavelength filter. Types of wavelength filters include an infrared cut filter, an 850 nm bandpass filter, and a 940 nm bandpass filter. In a case where the type of wavelength filter 201 is an infrared cut filter, the optical information acquisition wavelength is set to 600 nm, and in a case where the type is an 850 nm or 940 nm bandpass filter, the optical information acquisition wavelength is set to 850 nm and 940 nm, respectively. Then, the flow proceeds to step S204.

On the other hand, in step S203, the camera microcomputer 208 sets the optical information acquisition wavelength to the case of no wavelength filter 201 inserted. For example, as illustrated in Table 2, the optical information acquisition wavelength is set to 700 nm. Then, the flow proceeds to step S204.

In step S204, the camera microcomputer 208 transmits an optical information transmission request including the optical information acquisition wavelength set in step S202 or step S203 to the lens microcomputer 100. The lens microcomputer 110, which has received the optical information transmission request, reads out optical information corresponding to the optical information acquisition wavelength from the memory 112 and transmits it to the camera microcomputer 208.

Next, in step S205, the camera microcomputer 208 receives the optical information sent from the lens microcomputer 110 and stores it in memory 210.

Thereafter, using the optical information stored in memory 210, the camera microcomputer 208 controls the driving of the zoom lens 102, aperture stop 103, image stabilizing lens 104, focus lens 105, floating lens, etc.

This embodiment performs various controls to drive the focus lens, image stabilizing lens, and aperture stop using optical information corresponding to the optical information acquisition wavelength that is automatically set according to the insertion/removal or type of wavelength filter. Thus, good optical performance can be obtained regardless of whether a wavelength filter is inserted or removed or regardless of the type of filter, and as a result, a high-quality captured image can be obtained.

### EXAMPLE 3

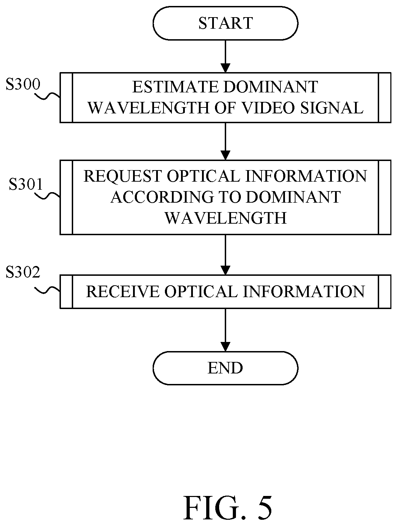

A flowchart in FIG. 5 illustrates the optical information acquisition processing executed by the camera microcomputer 208 according to a program, which automatically sets the optical information acquisition wavelength according to a dominant wavelength of the light (ambient light) in an imaging environment. For example, in an imaging environment using an infrared projector, the camera microcomputer 208 sets optical information according to the dominant wavelength of infrared light as the ambient light. In this embodiment, unlike Examples 1 and 2, the insertion/removal and type of the wavelength filter 201 are not determined, but optical information corresponding to the dominant wavelength of the ambient light received by the image sensor 202 is used according to the insertion/removal and type of the wavelength filter 201.

In step S300, the camera microcomputer 208 acquires a YUV signal expressed by a luminance signal Y and a color difference signal UV from an RGB video signal generated by imaging, and estimates the type and color temperature of the ambient light from the value obtained by accumulating the color difference signal UV. The camera microcomputer 208 further determines (estimates) the dominant wavelength of the ambient light from the estimated color temperature.

Next, in step S301, the camera microcomputer 208 sends an optical information transmission request including information on the determined dominant wavelength to the lens microcomputer 100. The lens microcomputer 110, which has received the optical information transmission request, reads out the optical information corresponding to the dominant wavelength from the memory 112 and transmits it to the camera microcomputer 208.

Next, in step S302, the camera microcomputer 208 receives the optical information sent from the lens microcomputer 110 and stores it in the memory 210.

Thereafter, using the optical information stored in the memory 210, the camera microcomputer 208 controls the driving of the zoom lens 102, aperture stop 103, image stabilizing lens 104, focus lens 105, floating lens, etc.

This embodiment performs various controls for driving the focus lens, image stabilizing lens, and aperture stop using optical information corresponding to the dominant wavelength of the ambient light according to whether the wavelength filter 201 is inserted or removed and the type of wavelength filter 201. Therefore, good optical performance can be obtained regardless of whether a wavelength filter is inserted or removed or regardless of the type of filter, and as a result, a high-quality captured image can be obtained.

### OTHER EMBODIMENTS

The present invention can supply a program that implements one or more functions of the above embodiments to a system or apparatus via a network or a storage medium, and can be implemented by one or more processors in a computer of the system or apparatus configured to read and execute the program. It can also be implemented by a circuit (*e.g.,* an ASIC) that implements one or more functions.

The embodiments described above are merely representative examples, and various modifications and changes may be made to the embodiments when the present invention is implemented.

## Claims

1. An optical apparatus comprising:
a processing means configured to perform processing regarding imaging in a case where a wavelength filter configured to control a wavelength of imaging light incident on an image sensor configured to capture an object image formed by an optical system can be inserted or removed; and
an acquiring means configured to acquire optical information on the optical system that is used for the processing, the optical information corresponding to the wavelength of the imaging light according to at least one of insertion/removal and a type of the wavelength filter.

2. The optical apparatus according to claim 1, **characterized in that** the acquiring means is configured to:
allow a user to select a specific wavelength according to at least one of the insertion/removal and the type of the wavelength filter, and
acquire the optical information corresponding to the specific wavelength.

3. The optical apparatus according to claim 2, **characterized in that** the acquiring means is configured to display to the user a wavelength that the user can select as the specific wavelength according to at least one of the insertion/removal and the type of the wavelength filter.

4. The optical apparatus according to any one of claims 1 to 3, **characterized in that** the acquiring means is configured to:
set a specific wavelength according to a result of determining at least one of the insertion/removal and the type of the wavelength filter, and
acquire the optical information corresponding to the specific wavelength.

5. The optical apparatus according to any one of claims 1 to 3, **characterized in that** the acquiring means is configured to:
determine a dominant wavelength of the imaging light according to at least one of the insertion/removal and the type of the wavelength filter from an output of the image sensor, and
acquire the optical information corresponding to the dominant wavelength.

6. The optical apparatus according to any one of claims 1 to 5, further comprising a focusing means configured to adjust an imaging position of the imaging optical system,
**characterized in that** the optical information is used to control driving of the focusing means.

7. The optical apparatus according to any one of claims 1 to 5, further comprising an image stabilizing means configured to correct image blur caused by movement applied to the imaging optical system,
**characterized in that** the optical information is used to control driving of the image stabilizing means.

8. The optical apparatus according to any one of claims 1 to 5, further comprising an aperture stop configured to adjust a light amount incident on the image sensor,
**characterized in that** the optical information is used to control driving of the aperture stop.

9. The optical apparatus according to any one of claims 1 to 8, **characterized in that** the wavelength filter is an infrared cut filter.

10. The optical apparatus according to any one of claims 1 to 8, **characterized in that** the wavelength filter is a bandpass filter.

11. The optical information according to any one of claims 1 to 10, **characterized in that** the optical information includes at least one of information on a focal length, information on an F-number, information on an imaging magnification, information on a position of a focus lens relative to an object distance, information on a change amount in an imaging position relative to a unit moving amount of the focus lens, information on a position of a floating lens configured to move along with movement of the focus lens, information on an image displacement amount on the image sensor relative to a unit moving amount of an image stabilizing lens, and information on a front principal-point position.

12. The optical apparatus according to any one of claims 1 to 11, **characterized in that** the optical apparatus is an image pickup apparatus that includes the image sensor and is attachable to and detachable from a lens apparatus that includes the optical system.

13. The optical apparatus according to any one of claims 1 to 11, **characterized in that** the optical apparatus is a lens apparatus that includes the optical system and is attachable to and detachable from an image pickup apparatus that includes the image sensor.

14. The optical apparatus according to any one of claims 1 to 13, **characterized in that** the processing means is configured to control the optical system as the processing.

15. A control method of an optical apparatus, the control method comprising the steps of:
perform processing regarding imaging in a case where a wavelength filter configured to control a wavelength of imaging light incident on an image sensor configured to capture an object image formed by an optical system can be inserted or removed; and
acquire optical information on the optical system that is used for the processing, the optical information corresponding to the wavelength of the imaging light according to at least one of insertion/removal and a type of the wavelength filter.

16. A program that causes a computer to execute processing according to the control method according to claim 15.
